# EUROPEAN PATENT APPLICATION

(11) **EP 2 172 385 A2**
(43) Date of publication of application: **07.04.2010**
(21) Application number: 09164197.7
(22) Date of filing: 30.06.2009
(51) Int. Cl.: B62B 5/06

(54) **Covering for trolley handles**

(30) Priority: 02.10.2008 IT PD20080063 U
(71) Applicant: P.L.T.M. S.r.l., 30174 Mestre (VE) (IT)
(72) Inventor: Berto, Franco, 30034, Mira (VE) (IT)
(74) Representative: Susanetto, Carlo

(57) **Abstract**

A covering (1) for handles (2) of trolleys (3) comprises a pair of strips (4a, 4b) welded to each other along a peripheral weld zone (5) and on which is defined a preferred tear zone (6) arranged to be torn in order to separate a first portion (7) of the covering (1), suitable for being slipped onto the handle (2), from a second portion (8) of the covering (1). The preferred tear zone (6) is configured so as to define an opening (12) on said first portion (7) so as to be able to slip said first portion (7) onto said handle (2).

## Description

### Technical field

The invention concerns a covering for trolley handles, of the type including the characteristics mentioned in the preamble of the main claim.

The invention further concerns a dispenser for coverings for trolley handles.

### Technological background

As part of daily life it is often necessary to use trolleys that are for public use, for example in supermarkets or shopping centres for doing the shopping, or at stations or airports for transporting baggage.

Such trolleys are customarily supplied at the supermarket, or shopping centre, station or airport, where they are gathered at suitable collection zones.

A user who needs one therefore goes to a specific collection zone from which to select a trolley, for example by means of cash or tokens, in order to use it for the desired purpose.

The user himself will then, after using the trolley, proceed to return it to the collection zone where it will subsequently be selected by another person who has need of it.

The same trolley is therefore used in succession by an indefinite number of persons who may soil it in various ways during use. Therefore, subsequent users risk coming into contact with dirt, or germs, left by the previous users.

In particular, the soiling may be located at the handle by means of which the trolley is manoeuvred, coming into direct contact with the hands of a user, or even worse, of a child carried on the trolley who could put its mouth there.

A series of studies and analyses carried out on the handles of shopping trolleys available outside supermarkets has shown the consistent presence of varied bacteria and germs that are dangerous to health, and of dirt.

The need therefore arises for a covering which can be fitted to the handles of trolleys or the like, so that the trolley can be grasped freely and used without danger to the health of the user.

It is further expedient to provide an effective and economic system for making coverings for handles immediately available to the various successive users of the trolleys.

### Description of the invention

These and other problems are solved by a covering for handles, and a dispenser, that are produced according to the following claims.

### Brief description of the drawings

The characteristics and advantages of the invention will become clearer from the detailed description of a preferred exemplary embodiment thereof, illustrated by way of non-limiting example with reference to the appended drawings, in which:
- Figure 1 is a schematic view of a covering for handles according to the invention;
- Figure 2 is a schematic view of the covering of Figure 1 in a ready-for-use configuration;
- Figure 3 shows diagrammatically the insertion of the covering of

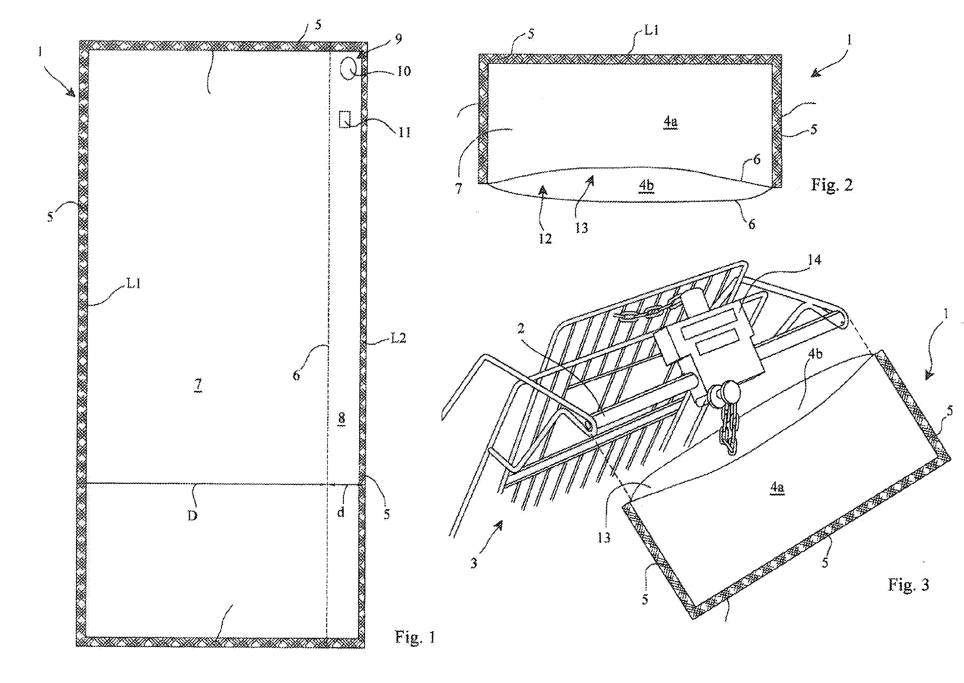

Figure 1 on the handle of a trolley.

### Preferred embodiment of the invention

With reference to the appended drawings, a covering for handles 1 is shown which is suitable for being slipped onto a handle 2 of a trolley 3 in order to protect a trolley user from any contamination by bacteria or other micro-organisms that may be present on the handle 2.

The covering 1 is in the shape of a rectangle with a pair of major sides L1, L2 having a length of between around 60 and around 70 cm, and a pair of minor sides I1, I2 having a length of around 25 cm.

However, it is possible for coverings to be produced which have dimensions and/or a shape different from those shown, so that they are suitable for being slipped onto handles of any desired size and/or shape.

The covering 1 is made of film-forming plastics material, preferably transparent and heat-weldable, for example of polypropylene or some other similar material.

The covering 1 comprises a pair of strips 4a, 4b which are welded to each other along a weld zone 5 which extends at least along a major side L1 and at least part of the two minor sides I1, I2 of the covering 1, such that an inner pocket 13 is defined between the two strips 4a, 4b.

Preferably, the two strips 4a, 4b are welded along the entire perimeter of the covering 1.

On the two strips 4a, 4b, approximately parallel to the major sides L1, L2 there is further provided a perforation line 6 suitable for defining a preferred tear zone of the covering 1, as explained more fully hereinafter, and which defines on the covering 1 a first portion 7 having a predominant width "D", for example of around 20 cm, and suitable for being slipped onto the handle 2, as shown in Figure 3, and a second portion 8 having a reduced width "d", for example of around 4 cm.

The perforation line 6 is additionally spaced from the portion of the weld zone 5 produced along the two major sides L1, L2, so as to be defined in a portion of the covering 1 in which the two strips 4a, 4b are separable from each other.

The second portion 8 is provided with securing means 9 arranged to co-operate with respective complementary securing means of a suitable dispenser for coverings, not illustrated, for securing the covering 1 to the aforesaid dispenser.

In the version shown, the securing means comprise a hole 10, by means of which the covering 1, or even better, a group of coverings, can be conveniently attached to a hook of the dispenser for coverings, in order to make them available to users.

Preferably, by means of a weld 11 provided at the second portion 8 of each covering 1, it is possible to bring together a desired number of coverings to form a group of coverings 1 which is then secured to the dispenser.

To use the covering 1, a user grasps the first portion 7, exerting a force such as to tear it off along the perforation line 6 separating the first portion 7 from the second portion 8, which remains secured to the dispenser, thus making the next covering available.

At the perforation line 6, the strips 4a, 4b are separated, and an opening 12 is then defined through which it is possible to access the inner pocket 13 and therefore the first portion 7 of the covering 1 can be slipped onto the handle 2, as shown in Figure 3.

The covering 1 is slipped on in such a way as to cover also any securing device 14 provided on the handle 2 of the trolley 3 and into which money can be inserted in order to attach/detach the trolley 3 to/from the collection zones.

The dimensions and the configuration of the covering 1 are conveniently such as to allow complete covering of the handle 2 of the trolley 3, even in the presence of the aforesaid device 14.

The covering 1 is opened only at the moment of use, therefore on the inside, between the two strips 4a, 4b, perfectly hygienic conditions are guaranteed.

The covering may additionally be produced from material provided with anti-bacterial properties, for example suitably treated polypropylene, so as to allow the handle 2 of the trolley 3 to be reliably rendered hygienic when the covering 1 is slipped on, subsequently protecting the user from any possible contamination.

The covering 1 may advantageously be used for covering any desired type of handle of trolleys, or the like, especially when provision is made for their use in succession by a plurality of different users.

The covering may also be used in all those cases where a user wishes to be protected from possible contamination, for example also in shopping baskets which are also available at the supermarket.

The dimensions and configuration of the covering 1 make it possible to use the covering also for trolleys provided with trolley securing devices by means of which to attach/detach the trolley to/from a collection zone for trolleys or to/from other trolleys.

## Claims

1. Covering (1) for handles (2) of trolleys (3), comprising a pair of strips (4a, 4b) welded to each other along a peripheral weld zone (5) and on which is defined a preferred tear zone (6) arranged to be torn in order to separate a first portion (7) of said covering (1), capable of being slipped onto said handle (2), from a second portion (8) of said covering (1), said preferred tear zone (6) being configured so as to define, on said first portion (7), an opening (12) between said strips (4a, 4b), so as to be able to slip said first portion (7) onto said handle (2).

2. Covering according to claim 1, wherein on said second portion (8) securing means (9, 10) are defined for securing said covering (1) to a dispenser for coverings.

3. Covering according to claim 2, wherein said securing means (9) comprise a hole (10).

4. Covering according to any one of the preceding claims, wherein said first portion (7) is configured so as to define an inner pocket (13) suitable for receiving inside it, in use, said handle (2).

5. Group of coverings for trolley handles (2), said coverings (1) being coupled to one another and produced according to any one of the preceding claims.

6. Group of coverings according to claim 5, wherein said coverings are coupled to one another by means of a weld (11) provided on said second portion (8) of said coverings.

7. Dispenser for coverings (1) for trolley handles (2), comprising a group of coverings according to claim 5 or 6 and complementary securing means arranged to co-operate with securing means (9, 10) defined in said coverings (1) so as to secure said coverings (1) to said dispenser.
